# EUROPÄISCHE PATENTSCHRIFT

(11) **EP 1 743 783 B1**
(45) Veröffentlichungstag und Bekanntmachung des Hinweises auf die Patenterteilung: **07.10.2009**
(21) Anmeldenummer: 06019222.6
(22) Anmeldetag: 31.05.2006
(51) Int. Cl.: B60D 5/00, B61D 17/22

(54) **Spurfugenabdeckung bei Gelenkfahrzeugen**
Gap cover for articulated vehicles
Couverture du joint pour véhicules articulés

(30) Priorität: 09.07.2005 DE 102005032218
(43) Veröffentlichungstag der Anmeldung: 17.01.2007
(62) Teilanmeldung aus: 06011168.9
(73) Patentinhaber: Hübner GmbH, 34123 Kassel (DE)
(72) Erfinder: Koch, Robert, 37242 Bad Sooden-Allendorf (DE); Mosaner, Knud, 34127 Kassel (DE)
(74) Vertreter: Walther, Walther & Hinz GbR

(56) Entgegenhaltungen:
- EP-A1- 0 215 329
- EP-A1- 0 698 514
- DE-C1- 10 005 994
- DE-U1- 29 921 498

## Beschreibung

Die Erfindung betrifft einen Balg mit im Bereich des Balgdaches angeordneter Balgdecke.

Eine gattungsgemäße Balgdecke ist in der DE 10208557 offenbart und auch in derFR 2 625 160.

Bei Gelenkfahrzeugen, und hier insbesondere bei Gelenkbussen, sind Motorwagen und Nachläufer, also die beiden Fahrzeugteile, durch ein Gelenk miteinander gekoppelt, wobei das Gelenk einen Drehteller, auch Plattform genannt, aufweist. Ein solcher Drehteller ermöglicht zum einen die Möglichkeit des Überwechselns von dem einem Fahrzeugteil zum anderen Fahrzeugteil, bietet aber auch zusätzliche Stehplätze während der Fahrt. Dieser Drehteller samt Gelenk ist von einem Balg, und hier insbesondere von einem Faltenbalg, umgeben, wobei ein solcher Balg üblicherweise zwei Seitenwände umfasst, die zumindest durch ein Balgdach miteinander verbunden sind, wobei zusätzlich noch ein Boden vorgesehen ist, so dass sich eine im Wesentlichen tunnelartige Struktur des Übergangs ergibt.

Zur Abdeckung der Spurfuge zwischen Drehscheibe oder Plattform und Balgseitenwand ist aus der EP 0 698 514 eine sogenannte Spurfugenabdeckung in Form einer Schürze bekannt. Diese Schürze ist ähnlich einem Balg ausgebildet und ist mit der Seitenwand des Balges verbunden.

Bekanntermaßen muss der Balg, beispielsweise eines Gelenkbusses den unterschiedlichsten Fahrbewegungen nachgeben können. Der Balg muss insbesondere in der Lage sein, sämtlichen Wank-, Knick- und Nickbewegungen folgen zu können. Wankbewegungen entstehen, wenn die beiden Fahrzeugteile relativ zueinander um die Längsachse verdreht werden; Nickbewegungen entstehen, wenn der Bus über eine Kuppe oder durch eine Senke fährt, und Knickbewegungen entstehen, wenn der Bus eine Kurve durchfährt. Üblicherweise gibt es auch Überlagerungen der einzelnen Bewegungsarten. Das heißt, dass an den Balg hohe Anforderungen an die Beweglichkeit gestellt werden.

Gegenstand der Erfindung ist nun, wie bereits ausgeführt, die Anordnung einer Balgdecke im Bereich des Balgdaches. Hierbei ist vorgesehen, dass der Balg zur Bildung eines Hohlraumes beabstandet zum Balgdach eine Balgdecke aufweist, wobei auch die Balgdecke mehrere Wellen oder Falten umfasst, die im Bereich ihres Scheitels durch Klemmleisten verbunden sind, wobei die Klemmleisten durch an der Balgseitenwand des Übergangs angeordnete Hülsen steckbar aufnehmbar sind. Im einzelnen ist vorgesehen, dass die Hülsen zur Aufnahme der Klemmleisten an dem der Balgdecke zugewandten Scheitel der Balgseitenwand angeordnet sind. Da die Balgdecke im Wesentlichen unmittelbar unter dem Balgdach verlaufend angeordnet ist und somit die Balgdecke die Balgseitenwand nur geringfügig aussteift, ist hierdurch auch nur eine geringe Einschränkung der Beweglichkeit des Balges zu befürchten, so dass nach einem weiteren Merkmal der Erfindung vorgesehen sein kann, die Klemmleisten in der Hülse, beispielsweise durch Schrauben, zu fixieren.

Anhand der Zeichnungen wird die Erfindung nachstehend beispielhaft näher erläutert.
- Fig. 1: zeigt perspektivisch eine Ansicht von innen auf einen Übergang mit einem Mittelrahmen;
- Fig. 2: zeigt einen Teil des Balges zwischen Endrahmen und Mittelrahmen, wobei aus dieser Darstellung die Anbindung der Spurfugenabdeckung an dem Balg erkennbar wird;
- Fig. 2a: zeigt als Einzelheit die Anbindung der Balgdecke an die Seitenwand des Balges;
- Fig. 2aa: zeigt die Hülse, die Klemmleiste und die Falte der Balgseitenwand in der Darstellung gemäß Fig. 2a als Einzelteile.

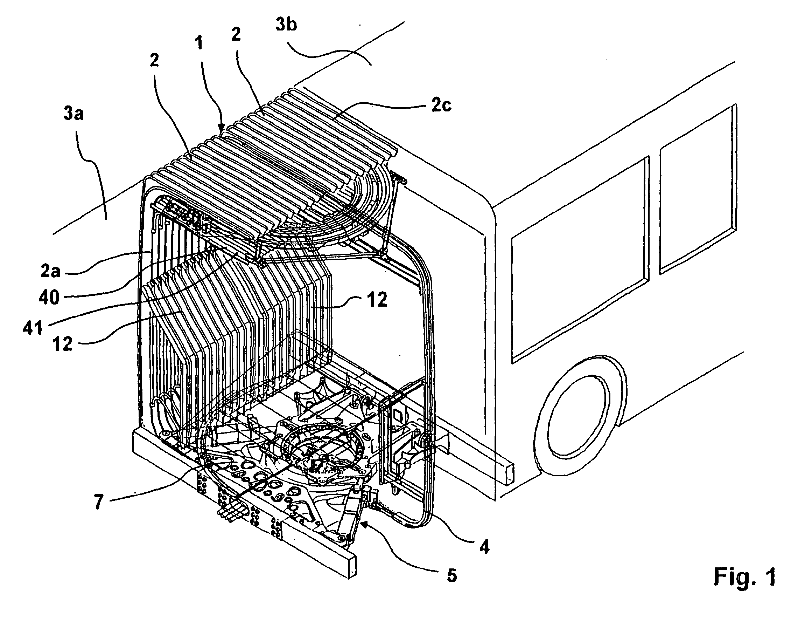

Gemäß Fig. 1 ist der Übergang insgesamt mit 1 bezeichnet. Der Übergang setzt sich zusammen aus den beiden identischen Balghälften 2, die durch den Mittelrahmen 4 miteinander verbunden sind. Endseitig sind die Balghälften an den Fahrzeugteilen 3a, 3b befestigt. Im Bereich der beiden Balghälften 2 befinden sich die beiden Spurfugenabdeckungen 12, die die Spurfuge zwischen Balgseitenwand 2a und dem Drehteller bzw. der Plattform 7 abdecken. Eine solche Spurfuge befindet sich auf jeder Seite des Balges. Unterhalb der Plattform 7 liegt das Gelenk 8. Der Balg mit den Balghälften 2 ist entsprechend der stirnseitigen Kontur der Fahrzeugteile getroffen und umgibt von unten auch das Gelenk. Der Balg ist demzufolge im Querschnitt kastenartig ausgebildet. Unterhalb des Balgdachs 2 befindet sich beabstandet dazu die Balgdecke 40, die die unter dem Balgdach geführte Kabelführung abdeckt.

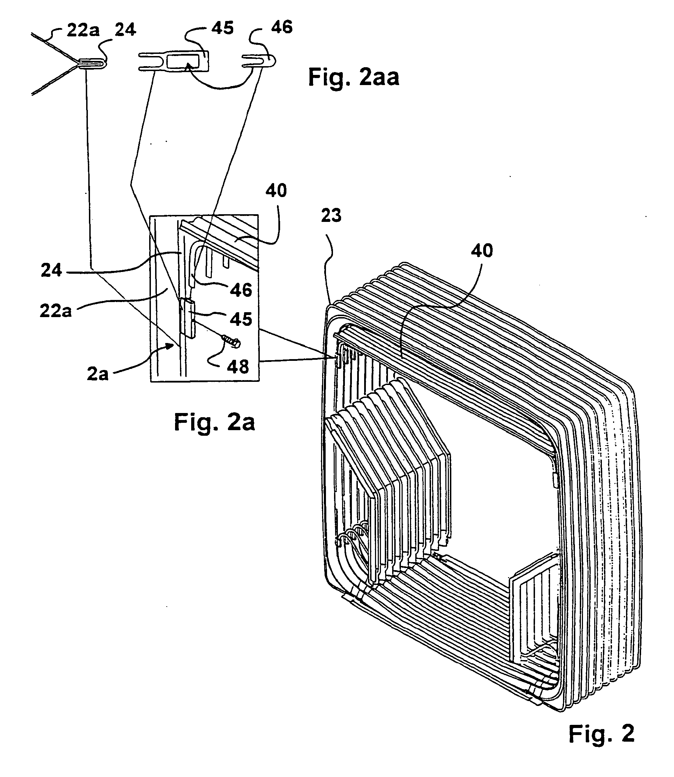

Die Seitenwand 2a weist mehrere Falten 22a auf, die untereinander außen durch Einfassrahmen verbunden sind und innen, d. h. auf den Innen-raum des Übergangs zu, durch ein Einfassband 24, wie sich dies aus Fig. 2aa ergibt, verbunden sind. Auf das Einfassband aufgeklemmt ist die Hülse 45, wobei in die Hülse 45 die Klemmleiste 46 (Fig. 2a, Fig. 2aa) einführbar ist.

Die Anbindung der Balgdecke 40, beabstandet zum Balgdach 2c an den Balgseitenwänden 2a ergibt sich aus Fig. 2 - 2aa. Die Balgdecke 40 umfasst ganz ähnlich wie der Balg selbst einzelne Falten 41, die wiederum durch Klemmleisten 46 gehalten sind. Diese Klemmleisten 46 sind endseitig in Richtung auf die Balgseitenwand 2a zu abgebogen und laufen dort in Klemmhülsen 45 ein, wie sich dies aus der Fig. 2a mit der explosionsartigen Darstellung gemäß Fig. 2aa ergibt. Vorgesehen ist hierbei, dass die Klemmleisten 46 der Balgdecke 40 durch Schrauben 48 in der Hülse 45 fixiert werden können. Die Hülse 45 ist mit dem Einfassband 24 verbunden, das die Falten 22a verbindet.

## Patentansprüche

1. Balg mit im Bereich des Balgdaches angeordneter Balgdecke,
**dadurch gekennzeichnet,**
**dass** die Balgdecke (40) zur Bildung eines Hohlraumes beabstandet zum Balgdach (2c) angeordnet ist, wobei die Balgdecke mehrere Wellen oder Falten umfasst, die im Bereich ihres Scheitels durch Klemmleisten (46) verbunden sind, wobei die Klemmleisten (46) durch an der Balgsseitenwand (2a) des Übergangs (1) angeordnete Hülsen (45) steckbar aufnehmbar sind.

2. Vorrichtung nach Anspruch 1,
**dadurch gekennzeichnet,**
**dass** die Hülsen (45) zur Aufnahme der Klemmleisten (46) an dem der Balgdecke (40) zugewandten Scheitel der Balgseitenwand (2a) angeordnet sind.

3. Vorrichtung nach Anspruch 1,
**dadurch gekennzeichnet,**
**dass** die Klemmleisten (46) in der Hülse (45) fixierbar sind.

## Claims

1. A bellows with a bellows ceiling disposed in the region of the bellows roof,
**characterized in**
**that** the bellows ceiling (40) is disposed at a distance from the bellows roof (2c) in order to form a cavity, said bellows ceiling incorporating several corrugations or pleats that are joined together by clamping strips (46) in the region of their apex, said clamping strips (46) being pluggably receivable by bushings (45) disposed on the bellows side wall (2a) of the connection (1).

2. The apparatus as set forth in claim 1,
**characterized in**
**that** the bushings (45) for receiving the clamping strips (46) are disposed on the apex of the bellows side wall (2a) that is turned toward the bellows ceiling (40).

3. The apparatus as set forth in claim 1,
**characterized in**
**that** the clamping strips (46) may be fixed in the bushing (45)

## Revendications

1. Soufflet avec un plafond disposé dans la région du toit du soufflet,
**caractérisé en ce**
**que** le plafond (40) du soufflet est disposé à distance du toit (2c) du soufflet en vue de former une cavité, le plafond du soufflet comprenant plusieurs ondulations ou plis qui sont reliés ensemble dans la région de leur sommet par des baguettes de serrage (46), ces baguettes de serrage (46) étant aptes à être reçues par enfichage dans des gaines (45) disposées sur la paroi latérale (2a) du soufflet de l'intercirculation (1).

2. Dispositif selon la revendication 1,
**caractérisé en ce**
**que** les gaines (45) destinées à recevoir les baguettes de serrage (46) sont disposées sur le sommet de la paroi latérale (2a) du soufflet qui est tourné vers le plafond (40) du soufflet.

3. Dispositif selon la revendication 1,
**caractérisé en ce**
**que** les baguettes de serrage (46) sont aptes à être fixées dans la gaine (45).
